# EUROPEAN PATENT APPLICATION

(11) **EP 4 848 435 A1**
(43) Date of publication of application: **02.12.2026**
(21) Application number: 25853646.5
(22) Date of filing: 23.06.2025
(51) Int. Cl.: H01M 50/244

(54) **BATTERY PACK AND ELECTRICAL APPARATUS**

(30) Priority: 15.08.2024 CN 202421991625 U
(71) Applicant: Eve Energy Co., Ltd., Huizhou, Guangdong 516006 (CN)
(72) Inventor: WANG, Tao, Huizhou, Guangdong 516006 (CN); LIU, Shuai, Huizhou, Guangdong 516006 (CN)
(74) Representative: Zhu, Puxing
(86) International application number: PCT/CN2025/102883
(87) International publication number: WO 2026/036914

(57) **Abstract**

The present application provides a battery pack and an electric device. The battery pack includes a housing and a cell group. The cell group is mounted between two side plates of the housing for thermal conduction. At least one of the side plates includes a plurality of fins, the plurality of fins extending in a length direction of the housing and being arranged at intervals in a height direction of the housing. The cell group dissipates heat via the fins in the side plates, thereby eliminating heat dissipation components such as flat multi-channel tubes and axial fans, reducing operating power consumption and decreasing an overall size of the battery pack.

## Description

This application claims priority to and the benefit of Chinese Patent Application No. 202421991625.4, filed on August 15, 2024, the disclosure of which is incorporated herein by reference in its entirety.

### TECHNICAL FIELD

The present application relates to the technical field of power batteries, and in particular, to a battery pack and an electric device.

### BACKGROUND

In the related art, a battery pack is assembled using a process in which a module is placed into a housing. The module is composed of aluminum end plates, flat multi-channel tubes, steel straps, and the like. After the module is installed into the housing, an axial-flow fan is used at the front of the housing to supply or exhaust air to remove heat. This process involves a large number of structural components, a complex production process, and low efficiency. In addition, the fan increases the operating power consumption of the battery pack and reduces efficiency. Meanwhile, flat multi-channel tubes for heat dissipation are interposed between cells of the module, resulting in a larger size of the housing.

### SUMMARY

In the related art, battery packs are associated with technical problems of high operating power consumption and large size.

The present application provides a battery pack, including a housing and at least one cell group. The housing includes a bottom plate and at least two side plates connected to the bottom plate, the at least two side plates extending along a length direction of the housing and being oppositely arranged in a width direction of the housing. Each cell group includes a plurality of cells arranged along the length direction of the housing and spaced apart from each other, and being mounted between two corresponding adjacent side plates for thermal conduction. At least one of the side plates includes a plurality of fins. The plurality of fins extend along the length direction of the housing and are spaced apart from each other along a height direction of the housing.

The present application further provides an electric device, which includes the above-mentioned battery pack.

### BENEFICIAL EFFECTS

The battery pack provided in the present application arranges the cells in the cell group along the length direction and mounts them between two corresponding adjacent side plates for thermal conduction, thereby improving heat dissipation efficiency and enabling the elimination of heat dissipation components such as flat multi-channel tubes and axial fans. As a result, the operating power consumption is reduced and the overall size of the battery pack is decreased, thereby improving the problems in the prior art of high operating power consumption and large battery pack size.

The electric device provided in the present application has all of the aforementioned beneficial effects of the battery pack.

### BRIEF DESCRIPTION OF THE DRAWINGS

FIG. 1 is a three-dimensional schematic view of a battery pack according to an embodiment of the present application;
FIG. 2 is an exploded schematic view of the battery pack according to an embodiment of the present application;
FIG. 3 is a three-dimensional schematic view of a housing of the battery pack according to an embodiment of the present application;
FIG. 4 is a front view among three orthographic views of the battery pack according to an embodiment of the present application;
FIG. 5 is a top view among three orthographic views of the battery pack according to an embodiment of the present application;
FIG. 6 is a side view among three orthographic views of the battery pack according to an embodiment of the present application;
FIG. 7 is a top schematic view of the battery pack shown in FIG. 2 according to an embodiment of the present application.

### Description of reference numerals:

1, bottom plate; 2, side plate; 21, first side plate; 22, second side plate; 23, third side plate; 3, cell group; 31, cell; 4, fin; 5, end plate; 51, front end plate; 52, rear end plate; 6, adhesive structure; 7, buffer member; 8, cell explosion-proof valve; 9, first through hole; 10, second through hole; 11, limiting member; 12, notch; 13, first output busbar; 131, first portion; 132, second portion; 133, third portion; 14, second output busbar; 15, first end; 16, handle; 17, series busbar; 18, partition plate; 19, second end; 20, insulating sheet.

### DETAILED DESCRIPTION

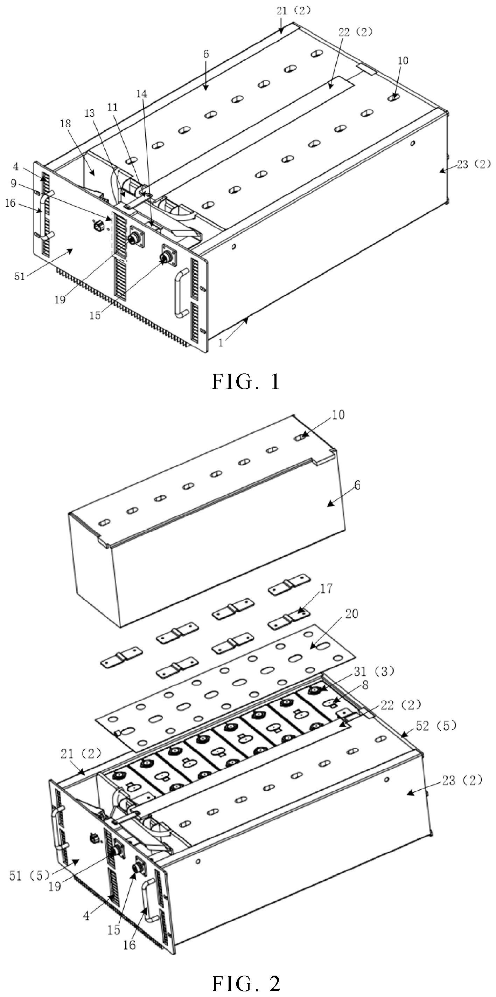

In the following, reference is made to FIGs. 1 to 7. An embodiment of the present application provides a battery pack, which includes a housing and at least one cell group 3. The housing includes a bottom plate 1 and at least two side plates 2 connected to the bottom plate 1. The at least one cell group 3 includes a plurality of cells 31, which are arranged along a length direction of the housing and are spaced apart from each other. The cell group 3 is mounted between two corresponding adjacent side plates 2 for thermal conduction. At least one of the side plates 2 includes a plurality of fins 4. The plurality of fins 4 extend along the length direction of the housing and are spaced apart from each other along a height direction of the housing.

The at least two side plates 2 extend along the length direction of the housing and are oppositely arranged in a width direction of the housing.

In this embodiment, since the cell group 3 is mounted between two adjacent side plates 2 for thermal conduction, the cell group 3 dissipates heat through the fins 4 in the side plates 2, thereby eliminating heat dissipation components such as flat multi-channel tubes and axial fans. As a result, the operating power consumption is reduced, and the overall size of the battery pack is also decreased, thereby addressing the problems in the prior art that the battery pack has high operating power consumption and a large size.

The present application will be described below in conjunction with specific embodiments.

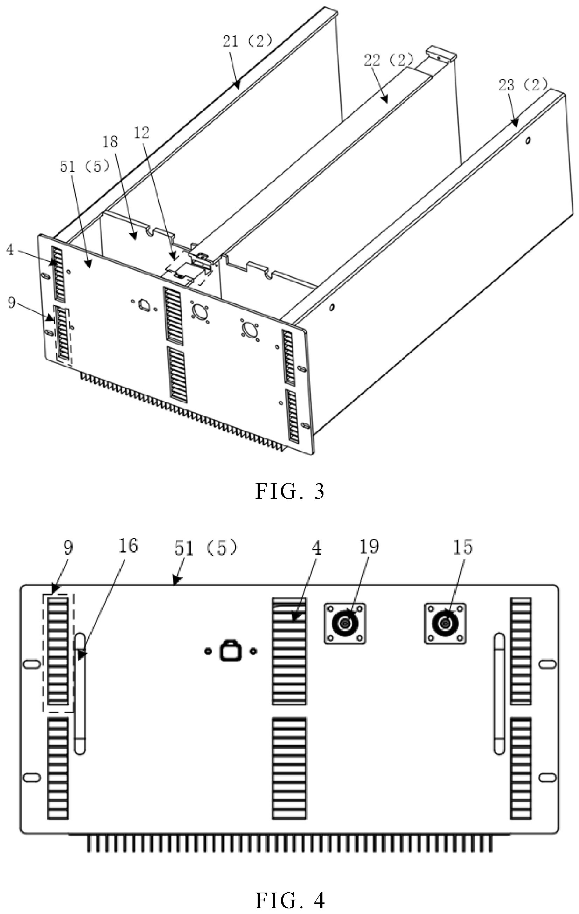

In an embodiment, reference is made to FIG. 3. The housing further includes an end plate 5. The end plate 5 is connected to an end of the bottom plate 1 and ends of the at least two side plates 2. The end plate 5 is provided with a first through hole 9, and the first through hole 9 is aligned with a corresponding fin 4.

The end plate 5 includes a front end plate 51 located on one side of the housing and a rear end plate 52 located on an opposite side of the housing.

The first through hole 9 may be selectively provided in at least one of the front end plate 51 and the rear end plate 52.

It can be understood that, by forming an opening in the end plate 5 aligned with the fin 4, airflow can easily enter the fin 4 and carry away heat, thereby enhancing the heat dissipation efficiency of the fin 4 for the cell group.

In this embodiment, by forming the first through hole 9 in the end plate 5 opposite to the fin 4, airflow is introduced between the fins 4 through the first through hole 9, thereby enhancing the heat dissipation efficiency of the fins 4 for the cell group.

In an embodiment, reference is made to FIG. 1, FIG. 3, FIG. 4, FIG. 5 and FIG. 6. Ventilation holes are formed between two adjacent fins 4 in the same side plate 2, and at least two of the ventilation holes are communicated with the first through hole 9.

Adjacent fins 4 are arranged at equal intervals along a thickness direction of the housing.

Adjacent fins 4 may further be connected to each other for thermal conduction, so that heat exchange is performed between different fins 4, thereby avoiding heat accumulation on a single fin 4.

It can be understood that the ventilation holes may be disposed opposite to and in communication with the first through hole 9, so that airflow from the first through hole 9 can pass through the ventilation holes and take away heat from the adjacent fins 4 on both sides of the ventilation holes.

In this embodiment, the ventilation holes can improve the heat dissipation efficiency of the fins 4.

In an embodiment, reference is made to FIG. 1, FIG. 2, FIG. 4, FIG. 5, and FIG. 6. The battery pack further includes a continuously arranged adhesive structure 6. Each cell group 3 is connected between two corresponding adjacent side plates 2 via the adhesive structure 6 for thermal conduction. The adhesive structure 6 covers at least a top surface and a side surface of at least one cell 31.

Each cell 31 is wrapped by the adhesive structure 6 to form an integral heat-conduction body, such that temperature rise data of the respective cells 31 are consistent, which is also beneficial to improving the uniformity of heat dissipation among the cells 31.

The battery pack further includes a CCS integrated busbar, and the adhesive structure 6 is arranged to wrap the CCS integrated busbar, so that the CCS integrated busbar is isolated from the outside, thereby avoiding short-circuit issues caused by air-conditioning condensation.

In this embodiment, by means of the continuously and integrally arranged adhesive structure 6, on the one hand, the temperature rise data of the respective cells 31 can be made consistent; on the other hand, heat dissipation of the cell group 3 is achieved through heat conduction between the adhesive structure 6 and the fins 4, so that heat dissipation components such as flat multi-channel tubes and axial fans can be eliminated, thereby reducing the size and power consumption of the battery pack while improving heat dissipation efficiency.

In an embodiment, a material for preparing the adhesive structure 6 is AB adhesive.

The AB adhesive serves to provide both fixing and heat conduction.

The AB adhesive includes a base adhesive and a hardener, and the adhesive structure 6 is hardened by mixing the base adhesive with the hardener.

It can be understood that the material for preparing the adhesive structure 6 may alternatively be selected as any one or more of a structural adhesive, a thermally conductive adhesive, and a potting adhesive, and may be selected according to specific process requirements.

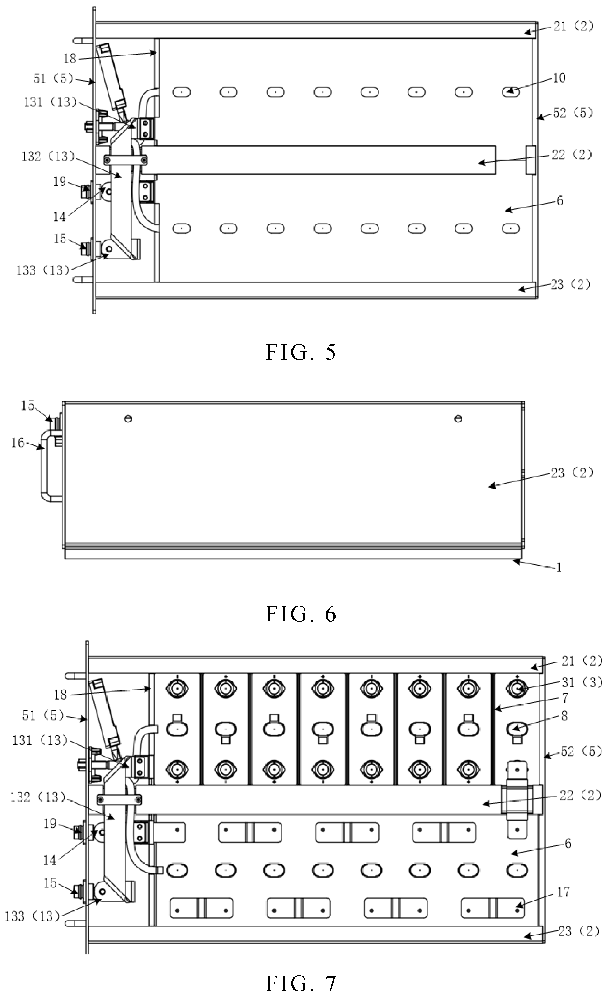

In an embodiment, reference is made to FIG. 7. In the same cell group 3, at least one cell 31 is provided with buffer members 7 on both a bottom surface and a side surface thereof, so that gaps are formed between the at least one cell 31 and the bottom plate 1, and between two adjacent cells 31, and the adhesive structure 6 is filled in the gaps.

A material for preparing the buffer member 7 may be a cushioning material, and the buffer member 7 can prevent collision damage between adjacent cells 31 and between the cells 31 and the side plates 2 and the bottom plate 1.

It can be understood that the buffer member 7 further functions to separate adjacent cells 31 and to separate the cells 31 from the bottom plate 1 and the side plates 2, such that gaps are formed between adjacent cells 31 and between the cells 31 and the bottom plate 1 and the side plates 2, thereby facilitating the adhesive structure 6 to pass through the gaps to wrap the cells 31.

In this embodiment, the buffer member 7 is used to provide a certain gap between each cell 31 and an adjacent cell 31, and between each cell 31 and the side plates 2 and the bottom plate 1, so that, during subsequent potting, each cell 31 can be ensured to be wrapped by the adhesive structure 6.

In an embodiment, each cell 31 includes a cell explosion-proof valve 8, a top of the adhesive structure 6 is provided with a plurality of second through holes 10, and each second through hole 10 exposes a corresponding cell explosion-proof valve 8.

The size of each second through hole 10 is greater than or equal to the size of the corresponding cell explosion-proof valve 8.

It can be understood that the cell explosion-proof valve 8 is configured to discharge gas inside the cell 31 to prevent the cell 31 from exploding. By exposing the cell explosion-proof valve 8 through the second through hole 10, it is possible to prevent an exhaust port of the cell explosion-proof valve 8 from being blocked by the adhesive structure 6, which is beneficial to the normal operation of the cell explosion-proof valve 8.

In this embodiment, by removing the adhesive structure 6 above the cell explosion-proof valve 8 and forming the second through hole 10, blockage and consequent failure of the exhaust port of the cell explosion-proof valve 8 by the adhesive structure 6 are avoided.

In an embodiment, reference is made to FIG. 1, FIG. 2, and FIG. 7. The cell groups 3 are two in number, and the two cell groups 3 include a first cell group 3 and a second cell group 3. The side plates 2 are three in number, and the three side plates 2 include a first side plate 21, a third side plate 23, and a second side plate 22 located between the first side plate 21 and the third side plate 23. The first cell group 3 is mounted between the first side plate 21 and the second side plate 22, and the second cell group 3 is mounted between the second side plate 22 and the third side plate 23. The battery pack further includes a first output busbar 13 and a second output busbar 14. One end of the first output busbar 13 is connected to the first cell group 3, and the first end 15 of the first output busbar 13 is located close to the third side plate 23. One end of the second output busbar 14 is connected to the second cell group 3, and the second end 19 of the second output busbar 14 is located close to the third side plate 23.

A plurality of cells 31 are connected in series between the first output busbar 13 and the second output busbar 14.

It can be understood that, by arranging the first end 15 of the first output busbar 13 and the second end 19 of the second output busbar 14, which are respectively in contact with the end plate 5, adjacent to each other and close to the third side plate 23, the distance between the first end 15 of the first output busbar 13 and the second end 19 of the second output busbar 14 can be reduced, thereby facilitating electrical connection between the battery pack and an external circuit.

In this embodiment, the distance between the first end 15 and the second end 19, which are respectively in contact with the end plate 5 of the first output busbar 13 and the second output busbar 14, is reduced, thereby facilitating electrical connection between the battery pack and an external circuit.

In an embodiment, reference is made to FIG. 1 and FIG. 3. The top of the second side plate 22 is provided with a limiting member 11 and a notch 12. The first output busbar 13 passes through the notch 12 and is located between a bottom wall of the notch 12 and the limiting member 11.

The limiting member 11 is configured to prevent the first output busbar 13 from disengaging from the notch 12.

The notch 12 is configured to conceal the first output busbar 13, so that the first output busbar 13 can pass through the second side plate 22 and the first end 15 of the first output busbar 13 can be disposed close to the third side plate 23.

In an embodiment, the first output busbar 13 includes a first portion 131, a third portion 133, and a second portion 132 bent and connected between the first portion 131 and the third portion 133. The first portion 131 is connected between the first cell group 3 and the second portion 132, the second portion 132 passes through the notch 12, and the third portion 133 is located close to the third side plate 23. The second portion 132 is located above the first portion 131 and the third portion 133, and the second output busbar 14 is located on a side of the third portion 133 away from the third side plate 23 and below the second portion 132.

In an embodiment, with reference to FIG. 3, a top surface of the housing is provided in a hollowed-out (open) manner.

It can be understood that, since the top surface of the housing is hollowed-out and no top plate is required, on the one hand, the adhesive structure 6 can replace and realize the function of the top plate; on the other hand, in a structure in which a plurality of battery packs are longitudinally stacked, two adjacent battery packs in the thickness direction can share one bottom plate 1, that is, the bottom plate 1 of an upper battery pack among the adjacent two battery packs can be commonly used as a top plate of a lower battery pack.

In this embodiment, by omitting the top plate of the battery pack, on the one hand, potting of the adhesive structure 6 is facilitated, and on the other hand, material is saved and the structure is simplified.

In an embodiment, the bottom plate 1 and the side plate 2 of the housing may be integrally formed as a single piece.

The housing may be made of an aluminum material.

It can be understood that the fins 4 are disposed inside the side plate 2, an outer surface of each fin 4 is in contact with an inner surface of the side plate 2, and the adhesive structure 6 is in contact with an outer surface of the side plate 2, such that the adhesive structure 6 conducts heat generated by the cells 31 outward, and the heat is transferred through the side plate 2 to the fins 4 for heat dissipation.

In an embodiment, with reference to FIG. 3, the battery pack includes an arrangement region for the cells 31 and a wiring arrangement region which are located on two sides of the partition plate 18. The arrangement region for the cells 31 is disposed closer to the front end plate 51 than the wiring arrangement region, and a handle 16 is further provided on an outer surface of the front end plate 51 to move the housing by means of the handle 16.

It can be understood that the arrangement region for the cells 31 includes a plurality of cell groups 3, and the wiring arrangement region includes a BMU, series busbars 17, and an insulating sheet 20. The series busbars 17 are arranged at intervals on the insulating sheet 20, and are connected to the cells 31 below through via holes penetrating the insulating sheet 20. When maintenance of the wiring arrangement region is required, the battery pack is pulled out by the handle 16, and since the top surface of the battery pack is hollowed-out, the wiring arrangement region of the battery pack can be directly maintained.

In a second aspect, some embodiments of the present application provide an electric device, which includes the battery pack according to any of the foregoing embodiments.

In a third aspect, some embodiments of the present application provide a battery pack configured as a laminated structure, which includes a plurality of battery packs according to any of the foregoing embodiments. The plurality of battery packs are stacked with each other, and in two adjacent battery packs in a stacking direction, a bottom plate 1 of one battery pack covers a top surface of the other battery pack.

The present application provides a battery pack, in which fins 4 for heat dissipation are disposed inside side plates 2 of the housing, and the fins 4 are in thermal conduction connection with cell groups 3, such that it is unnecessary to provide flat multi-channel tubes and axial fans, thereby reducing the size of the battery pack, reducing electric energy loss, and improving electric energy conversion efficiency.

In addition, by continuously wrapping each cell 31 with the adhesive structure 6, temperature rise data of the cells 31 can be made consistent.

Further, since the battery pack of the present application does not adopt a module-in-housing manner, but directly inserts the cells 31 into the housing, the use of structural components is reduced and assembly efficiency is improved.

Moreover, after potting, the housing becomes an integral structure, and the battery pack can withstand relatively large compressive forces from all directions.

## Claims

1. A battery pack, comprising:
a housing, comprising a bottom plate and at least two side plates connected to the bottom plate, the at least two side plates extending along a length direction of the housing and being oppositely arranged in a width direction of the housing; and
at least one cell group, each of the at least one cell group comprising a plurality of cells arranged along the length direction of the housing and spaced apart from each other, and being mounted between two corresponding adjacent side plates for thermal conduction;
wherein at least one of the at least two side plates comprises a plurality of fins, and the plurality of fins extend along the length direction of the housing and are spaced apart from each other in a height direction of the housing.

2. The battery pack according to claim 1, wherein the housing further comprises an end plate, the end plate is connected to an end of the bottom plate and ends of the at least two side plates, the end plate is provided with a first through hole, and the first through hole is aligned with a corresponding one of the plurality of fins.

3. The battery pack according to claim 2, wherein the end plate comprises a front end plate located on one side of the housing, and a rear end plate located on an opposite side of the housing.

4. The battery pack according to claim 3, wherein an outer surface of the front end plate is provided with a handle, and the handle is configured to move the housing.

5. The battery pack according to any one of claims 2 to 4, wherein, in a same one of the at least two side plates, ventilation holes are formed between two adjacent ones of the plurality of fins, and at least two of the ventilation holes are communicated with the first through hole.

6. The battery pack according to any one of claims 1 to 5, wherein the battery pack further comprises an adhesive structure arranged continuously, each of the at least one cell group is connected between two corresponding adjacent side plates through the adhesive structure for thermal conduction, and the adhesive structure covers at least a top surface and a side surface of at least one of the plurality of cells.

7. The battery pack according to claim 6, wherein the battery pack further comprises a CSS integrated busbar, and the CSS integrated busbar is wrapped by the adhesive structure.

8. The battery pack according to claim 6 or 7, wherein, in a same one of the at least one cell group, a bottom surface and a side surface of at least one cell among the plurality of cells are each provided with a buffer member, such that a gap is formed between the at least one cell and the bottom plate and between two adjacent ones of the plurality of cells, and the adhesive structure is filled in the gap.

9. The battery pack according to any one of claims 6 to 8, wherein each of the plurality of cells comprises a cell explosion-proof valve, a top of the adhesive structure is provided with a plurality of second through holes, and each of the plurality of second through holes exposes a corresponding one of the cell explosion-proof valves.

10. The battery pack according to any one of claims 1 to 9, wherein the at least one cell group comprise two cell groups, and the two cell groups comprise a first cell group and a second cell group; the at least two side plates comprise three side plates, and the three side plates comprise a first side plate, a third side plate, and a second side plate located between the first side plate and the third side plate; the first cell group is mounted between the first side plate and the second side plate, and the second cell group is mounted between the second side plate and the third side plate.

11. The battery pack according to claim 10, wherein the battery pack further comprises a first output busbar and a second output busbar, an end of the first output busbar is connected to the first cell group, another first end of the first output busbar is located close to the third side plate, an end of the second output busbar is connected to the second cell group, and another second end of the second output busbar is located close to the third side plate.

12. The battery pack according to claim 11, wherein the plurality of cells are connected in series to the first output busbar and the second output busbar.

13. The battery pack according to any one of claims 10 to 12, wherein a top of the second side plate is provided with a limiting member and a notch, and the first output busbar passes through the notch and is located between a bottom wall of the notch and the limiting member.

14. The battery pack according to claim 13, wherein the first output busbar comprises a first portion, a third portion, and a second portion bent and connected between the first portion and the third portion; the first portion is connected between the first cell group and the second portion, the second portion passes through the notch, and the third portion is located close to the third side plate; the second portion is located above the first portion and the third portion, and the second output busbar is located on a side of the third portion away from the third side plate and below the second portion.

15. The battery pack according to any one of claims 1 to 14, wherein a top surface of the housing is provided in a hollowed-out configuration.

16. The battery pack according to any one of claims 1 to 15, wherein the bottom plate and the side plate of the housing are of an integrally formed structure.

17. The battery pack according to any one of claims 1 to 16, wherein the battery pack comprises a cell arrangement region and a wiring arrangement region respectively located on two sides of a partition plate.

18. An electric device, comprising the battery pack according to any one of claims 1 to 17.
